# EUROPÄISCHE PATENTSCHRIFT

(11) **EP 1 967 472 B1**
(45) Veröffentlichungstag und Bekanntmachung des Hinweises auf die Patenterteilung: **05.08.2009**
(21) Anmeldenummer: 08008547.5
(22) Anmeldetag: 21.10.2005
(51) Int. Cl.: B65G 47/88, B65G 47/29, B23Q 16/00

(54) **Anschlag- und Dämpfermodul**
Impact and damping module
Module de butée et amortissement

(43) Veröffentlichungstag der Anmeldung: 10.09.2008
(62) Teilanmeldung aus: 05022966.5
(73) Patentinhaber: Wörner, Helmut, 73770 Denkendorf (DE); Unterhuber, Sebastian, 73257 Köngen (DE)
(72) Erfinder: Unterhuber, Sebastian, 73257 Köngen (DE)
(74) Vertreter: Vogler, Bernd

(56) Entgegenhaltungen:
- EP-A- 0 484 648
- DE-A1- 3 806 436
- DE-C1- 3 832 865

## Beschreibung

Die Erfindung betrifft ein Anschlagmodul, insbesondere für automatische Bearbeitungs- und Fördereinrichtungen, mit einem an einem Grundkörper angeordneten Anschlagglied für sich in einer Bewegungsebene in einer aktuellen Arbeitsbewegungsrichtung bewegende Gegenstände, das mittels eines elektrischen Stellglieds per Abwärtshub aus dieser Bewegungsebene heraus und per Aufwärtshub in diese zurückbewegbar ist, wobei eine mit dem Anschlagglied verbundene Dämpfungseinrichtung vorgesehen ist, um das Anschlagglied von einer ersten Anschlagstellung bis zu einer Endanschlagstellung gedämpft zu bewegen, und mit Rückstellmitteln zur Rückstellung des Anschlagglieds von der Endanschlagstellung in die erste Anschlagstellung.

Fluidisch betätigbare Anschlagmodule sind bekannt, beispielsweise aus der EP 0 484 648. Der dort beschriebene Anschlag ist mittels eines pneumatisch betätigbaren Stellkolben aus der Bewegungsbahn heranfahrender Werkstücke heraus und in diese zurückbewegbar. Für die Druckluftbeaufschlagung ist am Gehäuse ein Druckluftanschluss vorgesehen, über den gesteuert Druckluft zugeführt wird. Ferner ist dem Anschlag eine Dämpfungseinrichtung zugeordnet, sodass die Bewegung der anschlagenden Werkstücke abgedämpft werden kann. Das Ausfahren des Anschlagglieds von der Endanschlagstellung in die erste Anschlagstellung erfolgt hier ebenfalls über die gesteuert zugeführte Druckluft.

In bestimmten automatischen Bearbeitungs- und Fördereinrichtungen sind mit Druckluft betriebene Anschlagmodule jedoch ungeeignet, da im Falle einer Leckage Druckluft zur Beeinträchtigung beim Bearbeitungsprozess führen kann. Als Beispiel hierfür sind Lackierstrassen zu nennen. Um dem Abhilfe zu schaffen, sind bereits Anschlagmodule bekannt, deren Anschlagglieder mittels eines elektrischen Stellantriebs aus der Bewegungsebene der Gegenstände heraus und in diese zurückbewegbar sind. Bei bestimmten Bearbeitungs- und Förderprozessen ist es notwendig, die zu vereinzelnden Gegenstände gedämpft anschlagen zu lassen, da es ansonsten zu Beschädigungen an den Gegenständen bzw. am Anschlagmodul kommt, wenn die Gegenstände hart auftreffen. Hierzu sind die bereits erwähnten Dämpfungseinrichtungen bekannt, die jedoch ebenfalls mit extern zugeführter Druckluft arbeiten, d.h. das Anschlagglied wird per Druckluft in seine Grundstellung zurückgestellt.

Aufgabe der Erfindung ist es, ein Anschlagmodul der eingangs genannten Art zu schaffen, das trotz Vorhandensein einer Dämpfungseinrichtung ohne Druckluftanschlüsse auskommt.

Diese Aufgabe wird erfindungsgemäß durch ein Anschlagmodul mit den Merkmalen des unabhängigen Anspruchs gelöst.

Das erfindungsgemäße Anschlagmodul zeichnet sich dadurch aus, dass als Rückstellmittel ein weiteres elektrisches Stellglied vorgesehen ist. Das Anschlagmodul kann ohne extern zugeführte Druckluft betrieben werden, besitzt also keine Druckluftanschlüsse. Das erfindungsgemäße Anschlagmodul kann daher in verschiedenen automatischen Bearbeitungs- und Fördereinrichtungen eingesetzt werden, insbesondere auch in solchen, bei denen der Einsatz von Druckluft wie vorstehend erwähnt kritisch ist. Dabei wird die Rückstellung des Rückschlagglieds mittels eines zusätzlichen elektrischen Antriebs durchgeführt.

Es ist möglich, dass das elektrische Stellglied als elektrischer Drehantrieb ausgebildet ist. Beispielsweise kann ein elektrischer Drehantrieb in Form eines Spindelantriebs vorgesehen sein. Alternativ ist es auch möglich, einen elektrischen Stellmotor vorzusehen, der die vom elektrischen Stellmotor erzeugte rotatorische Abtriebsbewegung über ein Kurbelgetriebe oder über eine Zahnstange-/Ritzel-Anordnung, in eine Linearbewegung umsetzt. Alternativ ist es auch möglich, als elektrisches Stellglied einen Linearantrieb, beispielsweise einen Linearmotor oder einen elektromagnetischen Lineardirektantrieb zu verwenden.

Das weitere elektrische Stellglied, das zur Rückstellung des Anschlagglieds verwendet wird, kann ähnlich oder identisch zum elektrischen Stellglied, das zur Auf- und Abwärtsbewegung des Anschlagglieds verwendet wird, ausgebildet sein.

Ein bevorzugtes Ausführungsbeispiel der Erfindung ist in der Zeichnung dargestellt und wird im Folgenden näher erläutert. Die Zeichnung zeigt:
- Figur 1: ein erstes, nicht zur Erfindung gehörendes Ausführungsbeispiel des Anschlagmoduls in einer Längsabschnittdarstellung, wobei das Anschlagglied in seiner oberen, in die Bewegungsbahn der Gegenstände ragenden Position und in seiner eingefahrenen Endanschlagstellung dargestellt ist, wobei ein zu vereinzelnder Gegenstand am Anschlagglied angeschlagen ist,
- Figur 2: das Anschlagmodul von Figur 1, wobei das Anschlagglied in einer unterhalb der Bewegungsbahn der Gegenstände befindlichen Position und in seiner ausgefahrenen ersten Anschlagstellung dargestellt ist und
- Figur 3: ein zweites, erfindungsgemäßes Ausführungsbeispiel des Anschlagmoduls in einer schematischen Längsschnittdarstellung, wobei ein elektrischer Stellantrieb zur Rückstellung des Anschlaggliedes eingesetzt ist.

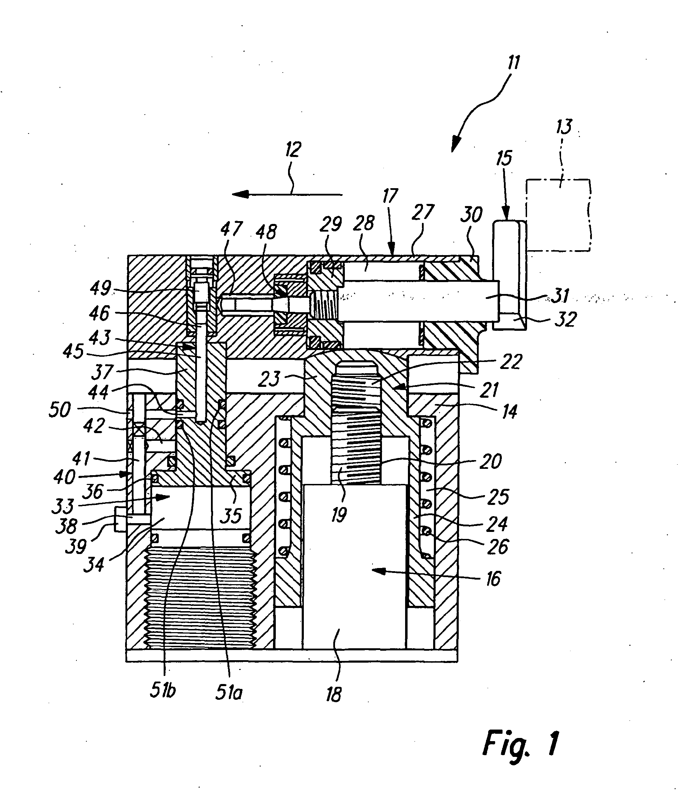

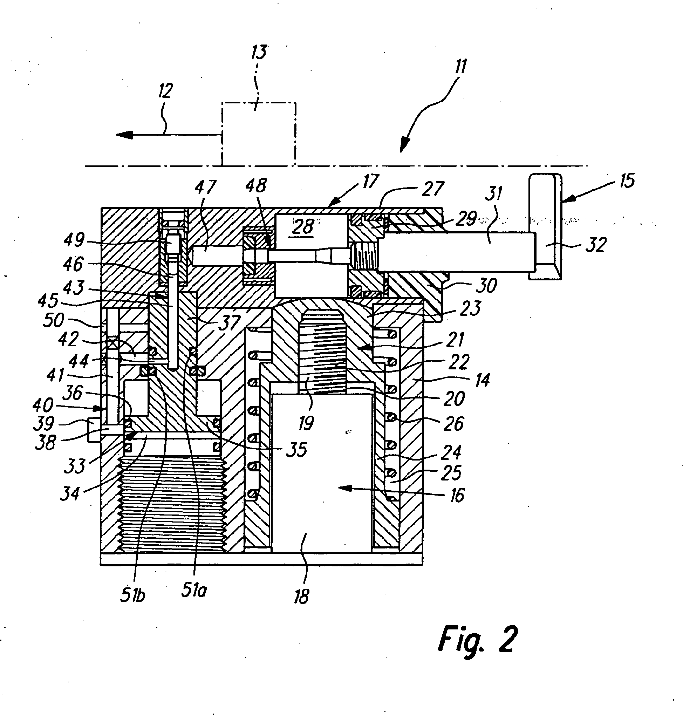

Die Figuren 1 und 2 zeigen ein erstes, nicht zur Erfindung gehörendes Ausführungsbeispiel des erfindungsgemäßen Anschlagmoduls 11. Das Anschlagmodul wird vorzugsweise in automatischen Bearbeitungs- und Fördereinrichtungen eingesetzt, um sich in einer Bewegungsebene in einer Arbeitsbewegungsrichtung 12 bewegende Gegenstände 13, beispielsweise Werkstücke oder dergleichen, zu vereinzeln. Nach der Vereinzelung können die Gegenstände dann individuell behandelt, beispielsweise bearbeitet, umgeleitet usw. werden.

Das Anschlagmodul 11 besitzt einen Grundkörper 14, dem ein Anschlagglied 15 angeordnet ist, das mittels eines elektrischen Stellgliedes 16 aus der Bewegungsebene der Gegenstände 13 heraus und in diese zurückbewegbar ist. Ferner ist eine Dämpfungseinrichtung 17 vorgesehen, mittels der das Anschlagglied 15 von einer ersten Anschlagstellung bis zu einer zweiten Endanschlagstellung gedämpft bewegbar ist.

Das elektrische Stellglied 16 ist gemäß den Figuren 1 und 2 beispielhaft anhand eines elektrischen Drehantriebs in Form eines Spindelantriebs 16 gezeigt. Der Spindelantrieb 16 besteht im Wesentlichen aus einer Antriebseinheit 18, die eine mit ihr gekoppelte Spindel 19 rotatorisch antreibt. Antriebseinheit 18 und Spindel 19 sind ortsfest gelagert. Die Spindel 19 besitzt ein Außengewinde 20, das mit einem an einer Spindelmutter 21 ausgebildeten Innengewinde 22 derart zusammenwirkt, dass die Spindelmutter 21 je nach Drehrichtung der Spindel 19 mehr oder weniger stark mit der Spindel 19 zusammengeschraubt wird, d.h. die Spindelmutter 21 führt wahlweise einen Aufwärts- oder einen Abwärtshub durch.

Die Spindelmutter 21 besitzt einen Kopfabschnitt 23, der mit der nachfolgend näher beschriebenen Dämpfungseinrichtung 17 verbunden ist, und einen Hülsenabschnitt 24, der die Antriebseinheit 18 des Spindelantriebs 16 hülsenartig umgreift. An der Mantelfläche des Hülsenabschnitts 24 befindet sich eine hohlzylinderartige Ausnehmung 25, in die Hubunterstützungsmittel in Form einer Feder 26 integriert sind. Die Feder 26 stützt sich einerseits ortsfest am Grundkörper 14 ab, während die Abstützung andererseits am Endbereich des Hülsenabschnitts 24 erfolgt.

Die Dämpfungseinrichtung 17 dient wie erwähnt dazu, das Anschlagglied 15 von der ersten Anschlagstellung bis zu einer zweiten Endanschlagstellung gedämpft zu bewegen. Die Dämpfungseinrichtung 17 umfasst einen Dämpfungszylinder 27, der einen Zylinderraum 28 aufweist, in dem ein Dämpfungskolben 29 verschiebbar geführt ist und mittels einer Kolbendichtung gegen die Wandung des Zylinderraumes 35 abgedichtet ist.

Am Dämpfungskolben 29 ist das L-förmig ausgebildete Anschlagglied 15 angebracht, das durch einen den Zylinderraum 28 abschließenden Zylinderdeckel 30 hindurchreicht. Das Anschlagglied 15 ist hier beispielhaft in Form eines zweiteiligen Anschlagglieds 15 dargestellt, mit einem koaxial zur Zylinderachse des Dämpfungszylinders 27 verlaufenden, mit dem Dämpfungskolben 29 verbundenen kolbenstangenartig ausgebildeten Basiskörper 31 und einem mit dem Basiskörper 31 über Befestigungsmittel verbundenen nach oben abgewinkelten Schenkel 32. Es ist selbstverständlich auch möglich, ein einstückig ausgebildetes Anschlagglied einzusetzen.

Zur Rückstellung des Anschlagglieds 15 von seiner in Figur 1 gezeigten Endanschlagstellung in die in Figur 2 gezeigte erste Anschlagstellung sind Rückstellmittel in Form wenigstens eines Energiespeichers 33 vorgesehen, der durch den Abwärtshub des Spindelantriebs 16 aufladbar ist und dessen gespeicherte Energie zur Rückstellung des Anschlagglieds 15 in die erste Anschlagstellung verwendbar ist. Als Energiespeicher ist ein Druckspeicher 33 vorgesehen, der wenigstens eine im Grundkörper 14 ausgebildete Druckkammer 34 mit Luft als Druckmedium aufweist, das durch einen mit dem Spindelantrieb 16 bewegungsgekoppelten Kolben 35 komprimierbar ist, wobei das komprimierte Druckmedium in einer in Figur 2 dargestellten Auslöseposition zur Rückstellung des Anschlagglieds 15 diesem zuführbar ist. Der Kolben 35 ist mittels einer Kolbendichtung 36 gegen die Wandung der Druckkammer 34 abgedichtet. Die Ankopplung des Kolbens 35 an den Spindelantrieb 16 erfolgt über einen kolbenstangeartigen Fortsatz 37, der einerseits insbesondere einstückig mit dem Kolben 35 und anderseits bewegungsstabil mit dem Dämpfungszylinder 27 verbunden ist, wobei Letzterer wiederum über den Kopfabschnitt 23 der Spindelmutter 21 an den Spindelantrieb 16 angekoppelt ist.

Die Druckkammer 34 ist über eine Umgebungs-Druckleitung 38 mit der Umgebung verbunden, wobei der Umgebungs-Druckleitung 38 Steuermittel in Form eines Rückschlagventils 39 zugeordnet sind, das derart schaltbar ist, dass die Umgebungs-Druckleitung beim Abwärtshub des Spindelantriebs 16 geschlossen ist, während die beim Aufwärtshub zum Zwecke des Ansaugens von Umgebungsluft in die Druckkammer 34 geöffnet ist. Ferner ist eine von der Druckkammer 34 abgehende ortsfeste erste Druckleitung 40 vorgesehen, die beispielsweise von der Umgebungs-Druckleitung 38 abzweigen kann. Die erste Druckleitung besitzt einen Vertikalabschnitt 41 und einen von diesem im Wesentlichen rechtwinkelig abgehenden Horizontalabschnitt 42. Die erste Druckleitung 40 ist im Grundkörper 14 ausgebildet und somit ortsfest. Darüber hinaus ist eine zweite Druckleitung 43 vorgesehen, die im kolbenstangenartigen Fortsatz 37 des Kolbens 35 ausgebildet ist. Die zweite Druckleitung 43 besitzt ebenfalls einen Horizontalabschnitt 44 und einen damit im Wesentlichen rechtwinkelig verbundenen Vertikalabschnitt 45. Der Vertikalabschnitt 45 mündet in einen im Dämpfungszylinder 27 ausgebildeten Kanal 46, der seinerseits mit einer dritten Druckleitung 47 verbunden ist. Die dritte Druckleitung 47 mündet schließlich in den Zylinderraum 28 des Dämpfungszylinders 27. Die Dämpfungseinrichtung 17 besitzt ferner eine Drosseleinrichtung 48, die einen Strömungswiderstand für bei der Kolbenbewegung ausströmende Luft bildet. Zur Feinjustierung der Dämpfungswirkung sind ferner Einstellmittel 49 vorgesehen, beispielsweise eine im Kanal 46 beweglich geführte Einstellschraube, mit der sich die Verbindung zwischen der dritten Druckleitung 47 und dem Kanal 46 wahlweise verengen oder erweitern lässt, wodurch dann wiederum der Drosseleffekt erhöht oder vermindert wird, wobei Letzterer wiederum die Dämpfungswirkung bestimmt.

Es ist ferner noch eine im Grundkörper 14 im Wesentlichen horizontal verlaufende Entlüftungs-Druckleitung 50 vorgesehen, um den Zylinderraum 28 beim Dämpfungsvorgang zu entlüften.

Bei der in Figur 1 dargestellten Situation befindet sich das Anschlagglied 15 in seiner oberen, in die Bewegungsbahn der Gegenstände 13 ragenden Position und es ist ein zu vereinzelnder Gegenstand 13 am Anschlagglied 15 angeschlagen. Das Anschlagen des Gegenstands 13 wurde mittels der Dämpfungseinrichtung 17 gedämpft, wobei die im Zylinderraum 28 des Dämpfungszylinders 27 vorhandene Luft mittels des Kolbens 28 über die Drosseleinrichtung 48 verdrängt wurde, wobei die verdrängte Luft über die dritte Druckleitung 47 in den Kanal 46, von dort in den Vertikalabschnitt 45 und schließlich in den Horizontalabschnitt 44 der zweiten Druckleitung 43 gelangt. Die Stellung des Kolbens 35 ist gemäß Figur 1 derart, dass der Horizontalabschnitt 44 der zweiten Druckleitung eine Strömungsbrücke mit der Entlüftungs-Druckleitung 50 bildet, wodurch die verdrängte Luft ins Freie gelangen konnte. In der Druckkammer 34 befindet sich über die Umgebungs-Druckleitung 38 angesaugte Umgebungsluft, die in der ersten Druckleitung 40 ansteht, jedoch nicht weiterströmen kann, da zwischen der ersten Druckleitung und der zweiten Druckleitung in dieser Stellung des Kolbens 35 keine Strömungsbrücke vorhanden ist.

Um das Anschlagglied 15 in seine in Figur 2 gezeigte unterhalb der Bewegungsbahn der Gegenstände 13 liegende eingefahrene Position zu bringen, wird der Spindelantrieb 16 aktiviert und die Spindel 19 in Drehbewegung versetzt, sodass sich die Spindelmutter 21 auf die Spindel 19 schraubt. In der in Figur 1 dargestellten ausgefahrenen Position des Anschlagglieds 15 ist in der Regel ein zu vereinzelnder Gegenstand 13 an das Anschlagglied 15 angeschlagen, steht also in Kontakt mit dem Anschlagglied 15. Dadurch entsteht beim Abwärtshub des Anschlagglieds 15 Reibung zwischen diesem und dem Gegenstand 13. Dies erfordert zusätzlich Hubkraft, die hier durch die Hubunterstützungsmittel in Form der Feder 26 aufgebracht wird. Da die Feder 26 im ausgefahrenen Zustand des Anschlagglieds 15 vorgespannt ist, kann sie sich folglich beim Abwärtshub wieder entspannen und so ihre Rückstellkraft zusätzlich zur vom Spindelantrieb 16 aufgebrachten Hubkraft zur Verfügung stellen.

Beim Abwärtshub bewegt sich auch der Kolben 35 nach unten, wodurch die in der Druckkammer 34 befindliche Umgebungsluft komprimiert wird. Der Kolben 35 erreicht beim Abwärtshub eine Auslöseposition, in der zwischen dem Horizontalabschnitt 42 der ersten Druckleitung 40 und dem Horizontalabschnitt 44 der zweiten Druckleitung 43 eine Strömungsbrücke gebildet wird, wodurch die in der Druckkammer 34 befindliche Druckluft über die erste und zweite Druckleitung 40, 43 in den Kanal 46, dann zur dritten Druckleitung 47 und von dort in den Zylinderraum 28 gelangt. Dadurch wird der Dämpfungskolben 29 mit Druck beaufschlagt, wodurch das Anschlagglied 15 von seiner in Figur 1 dargestellten Endanschlagstellung in seine erste Anschlagstellung rückgestellt wird. Das Anschlagmodul 11 ist nunmehr bereit, einen neuen Gegenstand 13 zu vereinzeln, falls das Anschlagglied 15 wieder in die obere in die Bewegungsbahn der Gegenstände 13 befindlichen Position gefahren wird. Beim Abwärtshub des Kolbens 35 sorgt das Rückschlagventil 39 dafür, dass die in der Druckkammer 34 befindliche Luft nicht über die Umgebungs-Druckleitung 38 ins Freie entweichen kann.

Wie in Figur 2 dargestellt, befinden sich ober- und unterhalb des Horizontalabschnitts 44 der zweiten Druckleitung Dichtungen 51a, 51b, beispielsweise in Form von Gleitringdichtungen, um zu verhindern, dass Umgebungsluft über die Außenwand des kolbenstangenartigen Fortsatz 37 ins Freie gelangt und damit nicht mehr zum Ausfahren des Anschlagglieds 15 zur Verfügung steht.

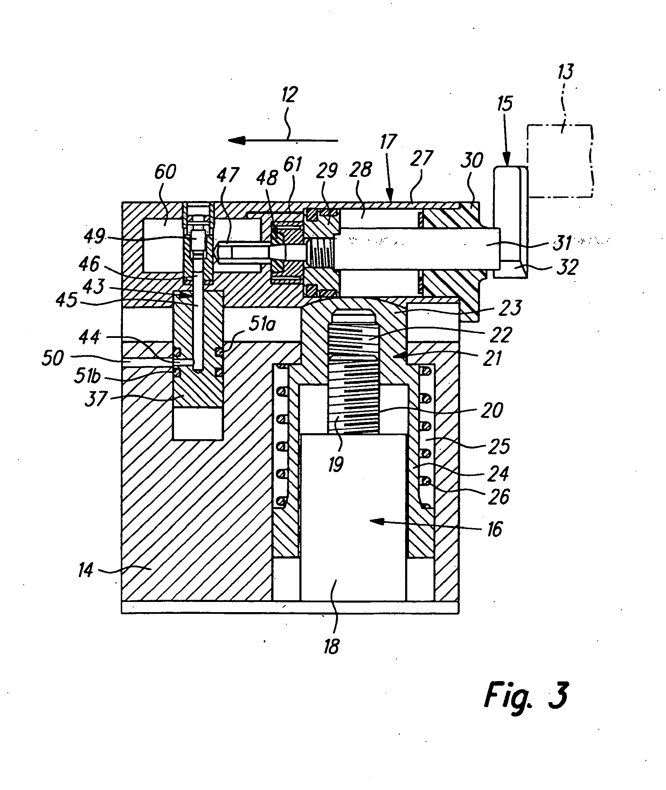

Figur 3 zeigt ein zweites, erfindungsgemäßes Ausführungsbeispiel des Anschlagmoduls 11, das sich vom ersten Ausführungsbeispiel dadurch unterscheidet, dass anstelle eines Energiespeichers 33 ein weiteres elektrisches Stellglied 60 zur Rückstellung des Anschlagglieds 15 verwendet wird. Als weiteres elektrisches Stellglied 60 kann ein elektrischer Drehantrieb eingesetzt werden, der über Umsetzmittel 61 eine rotatorische Abtriebsbewegung in eine Linearbewegung umsetzt, die wiederum den Dämpfungskolben 29 in seine erste Anschlagstellung zurückstellt. Die beim Dämpfungsvorgang verdrängte Luft kann über die zweite Druckleitung 43 im kolbenstangenartigen Fortsatz 37 in die Entlüftungs-Druckleitung 50 und von dort in die Umgebung gelangen. Es ist möglich, das weitere Stellglied 60 über einen Positionssensor zu aktivieren, falls der Spindelantrieb 16 seinen Abwärtshub durchführt.

## Patentansprüche

1. Anschlagmodul, insbesondere für automatische Bearbeitungs- und Fördereinrichtungen, mit einem an einem Grundkörper (14) angeordneten Anschlagglied (15) für sich in einer Bewegungsebene in einer aktuellen Arbeitsbewegungsrichtung (12) bewegende Gegenstände (13), das mittels eines elektrischen Stellglieds (16) per Abwärtshub aus dieser Bewegungsebene heraus und per Aufwärtshub in diese zurückbewegbar ist, wobei eine mit dem Anschlagglied (15) verbundene Dämpfungseinrichtung (17) vorgesehen ist um das Anschlagglied (15) von einer ersten Anschlagstellung bis zu einer zweiten Endanschlagstellung gedämpft zu bewegen, und mit Rückstellmitteln zur Rückstellung des Anschlagglieds (15) von der Endanschlagstellung zur ersten Anschlagstellung, **dadurch gekennzeichnet, dass** als Rückstellmittel ein weiteres elektrisches Stellglied (60) vorgesehen ist.

## Claims

1. Stop module, in particular for automatic machining and conveyor systems, with a stop member (15) mounted on a body (14) for objects (13) moving in a plane of movement in a current operating movement direction (12), which is movable by means of an electrical actuator (16) out of this movement plane for each downward stroke and back into it for each upward stroke, wherein a damping device (17) connected to the stop member (15) is provided in order to move the stop member (15) from a first stop position to a second limit stop position, and with resetting means for resetting the stop member (15) from the limit stop position to the first stop position, **characterised in that** a further electrical actuator (60) is provided as resetting means.

## Revendications

1. Module de butée, en particulier pour des dispositifs de traitement et de transport automatiques, avec un élément de butée (15) disposé sur un corps de base (14) pour des objets (13) se déplaçant dans un plan de déplacement dans un sens de déplacement de travail (12) actuel, qui peut être déplacé au moyen d'un organe d'actionnement (16) électrique par une course descendante hors de ce plan de déplacement et être ramené par une course ascendante dans celui-ci, dans lequel un dispositif d'amortissement (17) relié à l'élément de butée (15) est prévu afin de déplacer de manière amortie l'élément de butée (15) d'une première position de butée jusqu'à une seconde position de butée finale, et avec des moyens de rappel pour le rappel de l'élément de butée (15) de la position de butée finale à la première position de butée, **caractérisé en ce qu'**un autre organe d'actionnement (60) électrique est prévu comme moyens de rappel.
